# EUROPÄISCHE PATENTSCHRIFT

(11) **EP 0 376 059 B1**
(45) Veröffentlichungstag und Bekanntmachung des Hinweises auf die Patenterteilung: **02.02.1994**
(21) Anmeldenummer: 89123001.3
(22) Anmeldetag: 13.12.1989
(51) Int. Cl.: H01M 10/39

(54) **Elektrochemische Speicherzelle**
Electrochemical energy storage cell
Elément de stockage d'énergie électrochimique

(30) Priorität: 24.12.1988 DE 3843906
(43) Veröffentlichungstag der Anmeldung: 04.07.1990
(73) Patentinhaber: Asea Brown Boveri Aktiengesellschaft, 68309 Mannheim (DE)
(72) Erfinder: Kamuf, Alfred, D-6909 Walldorf (DE); Dörrscheidt, Wolfgang, Dr., D-6928 Helmstadt (DE)
(74) Vertreter: Rupprecht, Klaus, Dipl.-Ing.

(56) Entgegenhaltungen:
- FR-A- 2 315 777
- FR-A- 2 599 897
- GB-A- 2 127 615
- US-A- 3 915 741
- US-A- 4 204 035
- PATENT ABSTRACTS OF JAPAN, Band 9, Nr. 173 (E-329)[1896], 18. Juli 1985; & JP-A-60 44 972 (YUASA DENCHI K.K.) 11-03-1985
- PATENT ABSTRACTS OF JAPAN, Band 12, Nr. 94 (E-593)[2941], 26. März 1988; & JP-A-62 226 588 (HITACHI LTD) 05-10-1987
- PATENT ABSTRACTS OF JAPAN, Band 8, Nr. 277 (E-285)[1714], 18. Dezember 1984; & JP-A-59 146 170 (YUASA DENCHI K.K.) 21-08-1984

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Hochtemperatur-Speicherbatterien, die zur Stromversorgung von Elektrofahrzeugen vorgesehen sind.

Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Als Vorteil dieser Speicherzellen ist hervorzuheben, daß beim Aufladen derselben keine elektrochemischen Nebenreaktionen ablaufen, und die Stromausbeute daher etwa bei 100 % liegt. Bei diesen Speicherzellen ist das begrenzende Gehäuse becherförmig ausgebildet. Das gleiche gilt für den Festelektrolyten, in dessen Innenbereich der Anodenraum angeordnet ist. Der Kathodenraum befindet sich zwischen dem Festelektrolyten und dem Gehäuse. Elektrochemische Speicherzellen dieser Bauart bringen den Nachteil mit sich, daß es beim Anlegen von hohen Spannungen an die Speicherzellen zur Zerstörung der Festelektrolyten kommen kann. Eine Überalterung oder eine mechanische Beschädigung der Festelektrolyten kann ebenfalls zum Bruch derselben führen. Die Folge hiervon ist, daß Natrium aus dem Anodenraum und Schwefel aus dem Kathodenraum zusammenfließen und direkt miteinander reagieren können. Hierdurch kommt es zu einer starken Erwärmung innerhalb der Speicherzelle. In ungünstigen Fällen kann es dadurch zu einer Zerstörung des metallischen Gehäuses und angrenzender Speicherzellen kommen.

Aus der US-A 3,915,741 ist eine elektrochemische Speicherzelle bekannt, die von einem becherförmigen Gehäuse nach außen hin begrenzt ist. Im Inneren des Gehäuses ist ein ebenfalls becherförmig ausgebildeter Festelektrolyt angeordnet, dessen Abmessungen so gewählt sind, daß zwischen seinen Außenflächen und den Innenflächen des Gehäuses ein Ringraum verbleibt, der als Kathodenraum dient. Das Innere des Festelektrolyten dient als Anodenraum und steht über eine Leitung mit einem Vorratsbehälter für Natrium in Verbindung. Der Vorratsbehälter ist so ausgebildet, daß sein Innenbereich einen reduzierten Druck aufweist. Beim Bruch des Festelektrolyten fließt das Natrium aus dem Festelektrolyten in den Vorratsbehälter zurück, da der Druck im Kathodenraum wegen der obenerwähnten Maßnahmen immer größer ist als im Vorratsbehälter.

In der US-A 4,204,035 ist eine elektrochemische Speicherzelle beschrieben, die durch ein becherförmiges Gehäuse nach außen begrenzt wird. Im Inneren des Gehäuses ist ein ebenfalls becherförmiger Festelektrolyt angeordnet, dessen Abmessungen so gewählt sind, daß zwischen seinen Außenflächen und den Innenflächen des Gehäuses ein Ringraum verbleibt, der als Kathodenraum dient. In den Festelektrolyten ist eine Kartusche eingesetzt, die mit Natrium gefüllt ist. Das Füllen der Kartusche erfolgt unter Vakuum.

In der JP-A-60-44972 ist eine elektrochemische Speicherzelle beschrieben, die nach außen hin ebenfalls durch ein becherförmiges Gehäuse begrenzt wird. Ihr Festelektrolyt ist becherförmig ausgebildet, wobei seine Abmessungen ebenso gewählt sind, daß zwischen seinen Außenflächen und den Innenflächen des Gehäuses ein Ringraum verbleibt, der als Kathodenraum dient. In das Innere des Festelektrolyten ist eine Kartusche eingesetzt, die mit Natrium gefüllt ist. Das Füllen der Kartusche erfolgt unter Vakuum.

Aus der DE-OS 3 117 619.4 ist eine elektrochemische Speicherzelle auf der Basis von Natrium und Schwefel in becherförmiger Ausbildung bekannt. Um ein direktes Zusammenfließen von Natrium und Schwefel bei einem Bruch des Festelektrolyten zu vermeiden, ist ein Sicherheitsraum vorgesehen. Dieser ist in zwei Bereiche aufgeteilt. Der erste Bereich ist im Anodenraum und der zweite Bereich im Kathodenraum angeordnet. Mit diesem zusätzlichen Sicherheitsraum kann jedoch das direkte Zusammenfließen von Natrium und Schwefel nicht immer vollständig vermieden werden, so daß es hierbei dennoch zu einer starken Erwärmung der Speicherzelle und in ungünstigen Fällen zu einer Zerstörung und Beeinträchtigung von Nachbarzellen kommen kann.

Der Erfindung liegt die Aufgabe zugrunde, eine elektrochemische Speicherzelle der eingangs genannten Art so auszubilden, daß ihre Innentemperatur niemals soweit ansteigen kann, daß es zu einer Zerstörung des Zellgehäuses kommt.

Diese Aufgabe wird erfindungsgemäß durch die Merkmale der Patentansprüche 1 und 2 gelöst.

Dadurch, daß im Kathodenraum erfindungsgemäß ein höherer Druck aufrecht erhalten wird als im Anodenraum bzw. im gesamten Innenraum des Festelektrolyten kann bei einem Bruch des Festelektrolyten kein Natrium in den Kathodenraum fließen. Vielmehr wird bei einem Bruch des Festelektrolyten Schwefel oder Natriumpolysulfid, je nach dem in welchem Zustand sich die Speicherzelle befindet, in den Bruchstellenbereich und damit in den Spalt zwischen dem Sicherheitseinsatz und dem Festelektrolyten gepreßt. Da sich aufgrund der Konstruktion der Speicherzelle grundsätzlich nur soviel Natrium in dem Sicherheitsspalt befindet, daß die Innenfläche des Festelektrolyten hiervon gerade ausreichend benetzt wird, sind Reaktionen zwischen Natrium und Schwefel überhaupt nicht oder nur im geringen Umfang möglich. Die sich bildenden Reaktionsprodukte blockieren zusätzlich die Rißstelle, wodurch der Natriumnachfluß ebenfalls unterbunden wird. Das Aufrechterhalten eines höheren Drucks im Kathodenraum gegenüber dem Anodenraum kann beispielsweise durch ein zusätzliches Gaspolster im Kathodenraum erreicht werden. Eine andere Möglichkeit zur Aufrechterhalten eines höheren Drucks kann mit Hilfe einer chemischen Verbindung erzielt werden. Hierfür geeignete Verbindungen sind beispielsweise solche, die sich bei der Arbeitstemperatur der Speicherzelle von 300 bis 350 °C zersetzen, wobei ein inertes Gas frei wird. Die chemische Verbindung muß lediglich die Bedingung erfüllen, daß sie keine Reaktionen mit dem Schwefel des Kathodenraums bzw. dem Natriumpolysulfid eingeht. Besonders geeignet hierfür ist Natriumazid (NaN₃).

Weitere erfindungswesentliche Merkmale sind in den Unteransprüchen gekennzeichnet.

Die Erfindung wird nachfolgend anhand einer Zeichnung näher erläutert.

Die einzige zur Beschreibung gehörende Figur zeigt eine elektrochemische Speicherzelle 1 im Vertikalschnitt.

Diese wird im wesentlichen durch ein Gehäuse 2 und einen Festelektrolyten 3 gebildet. Beide sind becherförmig ausgebildet. Der Innenbereich des Festelektrolyten 3 dient als Anodenraum 4. Der Festelektrolyt 3 ist aus Betaaluminiumoxid gefertigt. Seine Abmessungen sind so gewählt, daß zwischen ihm und dem Gehäuse 2 ein zusammenhängender Zwischenraum verbleibt, der als Kathodenraum 5 dient. Innerhalb des Anodenraums 4 ist eine Kartusche 4K angeordnet, die mit Natrium 4N gefüllt ist. Die Abmessungen der Kartusche 4K sind so gewählt, daß zwischen ihrer Außenfläche und der Innenfläche des Festelektrolyten ein schmaler Spalt 4S verbleibt, der beim Betrieb der Speicherzelle 1 mit Natrium gefüllt ist. Um den Spalt 4S mit Natrium zu füllen, ist die Kartusche 4K an ihrem unteren Ende mit einer Austrittsöffnung 4E versehen, über welche Natrium in den Spalt 4S fließen kann. Der Natriumfluß ist gerade so groß, daß der Festelektrolyt 3 auf seiner Innenfläche überall mit Natrium benetzt ist. Der Kathodenraum 5 enthält im wesentlichen die Schwefelelektrode 5S, die durch einen Graphitfilz gebildet wird, der mit Schwefel getränkt ist.

Bei dem hier dargestellten Ausführungsbeispiel ist im Verschlußbereich der Speicherzelle innerhalb des Kathodenraums ein Gaspolster 6 vorgesehen, das über der Schwefelelektrode 5S angeordnet ist. Dieses Gaspolster 6 wird durch ein inertes Gas, beispielsweise Stickstoff gebildet, das einen definierten Druck auf die Schwefelelektrode 5S ausübt. Der Druck innerhalb des Kathodenraums 5 wird so groß gewählt, daß bei einem Bruch des Festelektrolyten 3 sichergestellt ist, daß kein Natrium aus dem Spalt 4S in den Kathodenraum fließen kann. Anstelle des Gaspolsters 6 kann auch eine chemische Verbindung 6 in den Kathodenraum 4 eingefüllt werden. Vorzugsweise wird hierfür eine solche chemische Verbindung verwendet, die sich bei der Arbeitstemperatur der Speicherzelle, vorzugsweise zwischen 300 und 350 °C zersetzt, wobei ein inertes Gas beispielsweise Stickstoff freigesetzt wird. Die verwendete chemische Verbindung muß zusätzlich die Bedingung erfüllen, daß sie weder mit dem Schwefel noch mit dem Natriumpolysulfid schädliche Reaktionsprodukte bildet. Die Menge der in den Kathodenraum zu füllenden chemischen Verbindung richtet sich nach der notwendigen Gasmenge, die erforderlich ist, um ebenfalls bei einem Bruch des Festelektrolyten das Einströmen des Natriums in den Kathodenraum verhindert. Eine hierfür geeignete chemische Verbindung ist Natriumazid, das sich bei 300 bis 350 °C zersetzt, wobei Stickstoff frei wird. Bei einem festen Verschluß der Speicherzelle 1 nach außenhin bleibt das Gaspolster 6 bzw. das sich bei der Zersetzung der chemischen Verbindung bildende Gas über die gesamte Lebensdauer der Speicherzelle wirksam. Der Verschluß des Kathodenraums 4 erfolgt über einen nach innen weisenden Flansch 2F am oberen Ende des Gehäuses 2 und dem nach außen weisenden Flansch 3F des Festelektrolyten 3, der aus Alphaaluminiumoxid gefertigt ist. Der nach außen weisende Teil des Flansches 3F ist über ein Dichtungsring 2D auf dem nach innen weisenden Flansch 2F aufgesetzt und abgestützt. Der Innenbereich des Festelektrolyten 3 ist durch einen Deckel 3D verschlossen, an dessen Außenfläche der anodische Stromabnehmer 7 befestigt ist, der elektrisch leitend mit dem Innenbereich des Anodenraums 4 in Verbindung steht. Der kathodische Stromabnehmer wird durch das metallische Gehäuse 2 gebildet.

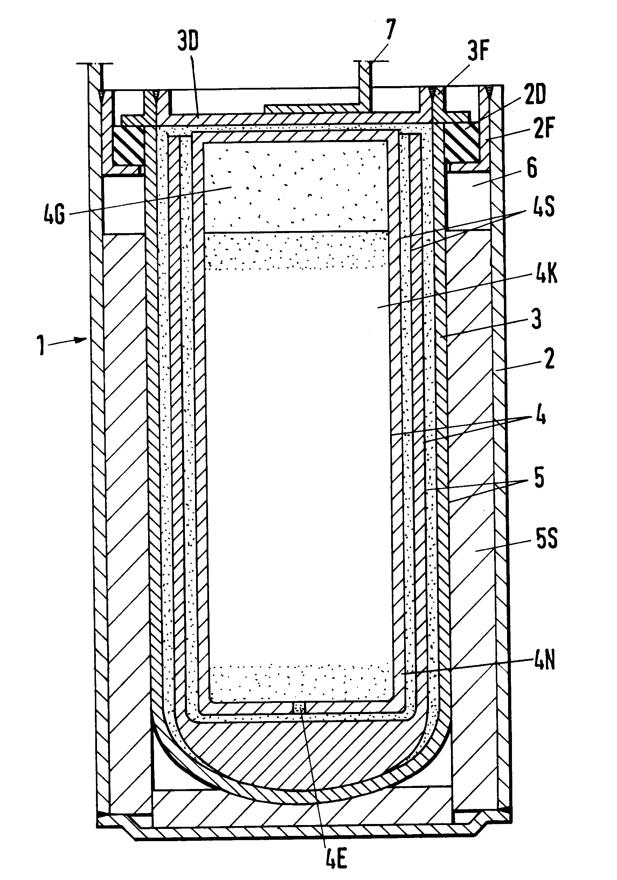

## Patentansprüche

1. Verfahren zur Herstellung einer elektrochemischen Speicherzelle auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse begrenzt sind, wobei im Anodenraum (4) eine mit Natrium gefüllte Kartusche (4K) angeordnet und zwischen dieser und dem Festelektrolyten (3) ein mit Natrium gefüllter Spalt (4S) vorgesehen ist, und im Kathodenraum (5) ein größer Druck als im Anodenraum herrscht, um den Zusammenfluß von Natrium und Schwefel im Kathodenraum (5) beim Bruch des Festelektrolyten (3) zu verhindern, **dadurch gekennzeichnet,** daß zur Aufrechterhaltung des größeren Drucks im Kathodenraum (5) neben der Schwefelelektrode (5S) ein Gaspolster aus Stickstoff (5) oder eine sich bei 300° bis 350°C zersetzende chemische Verbindung in Form von Natriumazid in den Kathodenraum (5) eingefüllt wird.

2. Elektrochemische Speicherzelle auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse begrenzt sind, wobei im Anodenraum (4) eine mit Natrium gefüllte Kartusche (4K) angeordnet und zwischen dieser und dem Festelektrolyten (3) ein mit Natrium gefüllter Spalt (4S) vorgesehen ist, und im Kathodenraum (5) ein größer Druck herrscht als im Anodenraum, um den Zusammenfluß von Natrium und Schwefel im Kathodenraum (5) beim Bruch des Festelektrolyten (3) zu verhindern, **dadurch gekennzeichnet,** daß zur Aufrechterhaltung des größeren Drucks im Kathodenraum (5) neben der Schwefelelektrode (5S) eine sich bei 300° bis 350°C zersetzende chemische Verbindung in Form von Natriumazid (6) eingefüllt ist.

## Claims

1. Process for the preparation of an electrochemical storage cell based on sodium and sulphur, having an anode space (4) and a cathode space (5) which are separated from one another by an alkali metal ion-conducting solid electrolyte (3) and are bounded at least over a certain area by a metallic housing, a cartridge (4K) filled with sodium being arranged in the anode space (4) and a gap (4S) filled with sodium being provided between said cartridge and the solid electrolyte (3), and the pressure prevailing in the cathode space (5) being higher than in the anode space in order to avoid the flowing together of sodium and sulphur in the cathode space (5) upon rupture of the solid electrolyte (3), characterised in that, in addition to the sulphur electrode (5S), a gas cushion (6) of nitrogen (5) or a chemical compound, in the form of sodium azide, which decomposes at 300 to 350°C is introduced into the cathode space (5) in order to maintain the higher pressure in the cathode space (5).

2. Electrochemical storage cell based on sodium and sulphur, having an anode space (4) and a cathode space (5) which are separated from one another by an alkali metal ion-conducting solid electrolyte (3) and are bounded at least over a certain area by a metallic housing, a cartridge (4K) filled with sodium being arranged in the anode space (4) and a gap (4S) filled with sodium being provided between said cartridge and the solid electrolyte (3) and the pressure prevailing in the cathode space (5) [lacuna] higher than in the anode space in order to avoid the flowing together of sodium and sulphur in the cathode space (5) upon rupture of the solid electrolyte (3), characterised in that, in addition to the sulphur electrode (5S), a chemical compound, in the form of sodium azide (6), which decomposes at 300 to 350°C is introduced in order to maintain the higher pressure in the cathode space (5).

## Revendications

1. Procédé de fabrication d'un élément de batterie électrochimique à base de sodium et de soufre comportant une chambre d'anode (4) et une chambre de cathode (5) qui sont séparées l'une de l'autre par un électrolyte solide (3) conducteur par ions alcalins et sont entourées par endroits au moins d'une enveloppe métallique, une cartouche (4K) remplie de sodium étant placée dans la chambre d'anode (4), un espace (4S) rempli de sodium étant prévu entre ladite cartouche et l'électrolyte solide (3) et une pression supérieure à celle de la chambre d'anode régnant dans la chambre de cathode (5) afin d'empêcher l'écoulement conjoint de sodium et de soufre dans la chambre de cathode (5) en cas de fissuration de l'électrolyte solide (3), caractérisé par le fait que pour maintenir la pression plus élevée à l'intérieur de la chambre de cathode (5) on place dans la chambre de cathode (5) autour de l'électrode en soufre (5S), un tampon de gaz formé d'azote (5) ou un composé chimique sous forme d'azide de sodium qui se décompose à une température comprise entre 300 et 350 °C.

2. Procédé de fabrication d'un élément de batterie électrochimique à base de sodium et de soufre comportant une chambre d'anode (4) et une chambre de cathode (5) qui sont séparées l'une de l'autre par un électrolyte solide (3) conducteur par ions alcalins et sont entourées par endroits au moins d'une enveloppe métallique, une cartouche (4K) remplie de sodium étant placée dans la chambre d'anode (4), un espace (4S) rempli de sodium étant prévu entre ladite cartouche et l'électrolyte solide (3) et une pression supérieure à celle de la chambre d'anode régnant dans la chambre de cathode (5) afin d'empêcher l'écoulement conjoint de sodium et de soufre dans la chambre de cathode (5) en cas de fissuration de l'électrolyte solide (3), caractérisé par le fait que pour maintenir la pression plus élevée à l'intérieur de la chambre de cathode (5) on remplit la chambre de cathode (5) autour de l'électrode en soufre (5S) d'un composé chimique sous forme d'azide de sodium (6) qui se décompose à une température comprise entre 300 et 350 °C.
